# EUROPEAN PATENT APPLICATION

(11) **EP 3 809 225 A1**
(43) Date of publication of application: **21.04.2021**
(21) Application number: 18935160.4
(22) Date of filing: 30.09.2018
(51) Int. Cl.: G05D 1/00, G05D 9/02

(54) **BASE STATION AND VEHICLE HAVING SAME**

(71) Applicant: SZ DJI Technology Co., Ltd., Shenzhen, Guangdong 518057 (CN)
(72) Inventor: WANG, Hao, Shenzhen, Guangdong 518057 (CN); ZHANG, Song, Shenzhen, Guangdong 518057 (CN); WANG, Peng, Shenzhen, Guangdong 518057 (CN)
(74) Representative: Goddar, Heinz J.
(86) International application number: PCT/CN2018/109193
(87) International publication number: WO 2020/062286

(57) **Abstract**

A base station and vehicle thereof. The base station (100) can communicate wirelessly with the UAV (200). The base station (100) includes an operating platform (120), a landing platform (130), a transfer mechanism (140) that is at least partially disposed on the landing platform to send the UAV landed on the landing platform into the operating platform and/or transfer the UAV stored in the operating platform 120 onto the landing platform, and a controller (110) for trigger the base station to perform the operation of recovering the UAV and/or releasing the UAV when the state of the UAV meets a specific strategy or when a dispatching instruction is received; and when the base station is performing the operation of recovering the UAV and/or releasing the UAV, control the operating platform to perform at least one of the following operations of updating the power source of the UAV, replacing parts of the UAV, supplementing the payload of the UAV, exchanging data with the UAV, and storing the UAV.

## Description

### TECHNICAL FIELD

The present disclosure relates to the field of unmanned aerial vehicle management and, more specifically, to a base station and a vehicle thereof.

### BACKGROUND

The application of unmanned aerial vehicles (UAVs) has become more and more popular, and the UAVs are often more frequently used in areas with no people, in wilderness, and over farmland or forest. The use of UAVs in these areas generally needs power source replacement, component maintenance, payload supplementation, and data exchange through base stations. The conventional base station operation method also needs human intervention. For example, the UAV controller may need to control the UAV to accurately land on the base station and adjust the position of the UAV to wait for further operation, or manually operate the UAV in the base station, or control the UAV to take off after the UAV operation is completed. These conventional workflows cannot be automated and are inefficient. In addition, when the number of UAVs is large, but the human resources are insufficient, this problem is particular prominent, and the conventional operation method can no longer meet the demand. Further, the conventional automated operation method cannot ensure that the UAV is accurately placed on the base station, or cannot ensure that the UAV is accurately placed on the operation station of the base station, and thus cannot ensure the safety of the UAV.

### SUMMARY

The present disclosure provides a base station and a vehicle thereof.

More specifically, the present disclosure can be implemented through the following technical solutions.

According to a first aspect of the present disclosure, there is provided a base station. The base station can communicate wirelessly with a UAV. The base station includes an operating platform; a landing platform, the landing platform and the operating platform being independent of each other and the landing platform being adjacent to the operating platform, or the landing platform and the operating platform being an integral structure; a transfer mechanism at least partially disposed on the landing platform to send the UAV landed on the landing platform into the operating platform and/or transfer the UAV stored in the operating platform onto the landing platform; and a controller configured to trigger the base station to perform a UAV recovery operation and/or a UAV releasing operation when a state of the UAV meets a specific strategy or when a dispatch instruction is received; and control the operating platform to perform at least one of the following operations of UAV power source update, UAV part replacement, UAV payload supplementation, UAV data exchange, and UAV storage while the base station performing the UAV recovery operation and/or the UAV releasing operation.

According to a second aspect of the present disclosure, there is provided a vehicle. The vehicle includes a body and a base station. The base station is disposed on the body and the base station can communicate wirelessly with a UAV. The base station includes an operating platform; a landing platform, the landing platform and the operating platform being independent of each other and the landing platform being adjacent to the operating platform, or the landing platform and the operating platform being an integral structure; a transfer mechanism at least partially disposed on the landing platform to send the UAV landed on the landing platform into the operating platform and/or transfer the UAV stored in the operating platform onto the landing platform; and a controller configured to trigger the base station to perform a UAV recovery operation and/or a UAV releasing operation when a state of the UAV meets a specific strategy or when a dispatch instruction is received; and control the operating platform to perform at least one of the following operations of UAV power source update, UAV part replacement, UAV payload supplementation, UAV data exchange, and UAV storage while the base station performing the UAV recovery operation and/or the UAV releasing operation.

It can be seen from the technical solutions provided by the above embodiments of the present disclosure that the base station of the embodiments of the present disclosure can realize the automatic recovery and release of the UAV through the cooperation between the operating platform, the landing platform, the transfer mechanism, and the controller when it is needed to dispatch the UAV or detect that the UAV meets a specific strategy (when it is recovered or released). In addition, during the recovery or release process, processes such as power source replacement, part maintenance, payload supplementation, data exchange, and UAV storage can be performed on the UAV through the operating platform to ensure that the UAV can maintain normal working condition and can be directly used to perform related tasks subsequently. The recovery and release process of the UAV does not involve manual participation, and the base station is highly intelligent, thereby avoiding time waste caused by manual operation to perform operations such as power source replacement, part maintenance, payload supplementation, data exchange, UAV storage, etc.

### BRIEF DESCRIPTION OF THE DRAWINGS

In order to illustrate the technical solutions in accordance with the embodiments of the present disclosure more clearly, the accompanying drawings to be used for describing the embodiments are introduced briefly in the following. It is apparent that the accompanying drawings in the following description are only some embodiments of the present disclosure. Persons of ordinary skill in the art can obtain other accompanying drawings in accordance with the accompanying drawings without any creative efforts.
FIG. 1 is a structural block diagram of a UAV system according to an embodiment of the present disclosure.
FIG. 2 is a schematic structural diagram of a base station according to an embodiment of the present disclosure.
FIG. 3 is a schematic diagram of the base station in a state according to an embodiment of the present disclosure.
FIG. 4 is a schematic diagram of the base station in another state according to an embodiment of the present disclosure.
FIG. 5 is a schematic structural diagram of another base station according to an embodiment of the present disclosure.
FIG. 6 is a schematic structural diagram of another base station according to an embodiment of the present disclosure.
FIG. 7 is schematic diagram of a cooperation between an operating platform and a landing platform according to an embodiment of the present disclosure.
FIG. 8 is a schematic diagram of a cooperation between the operating platform and the landing platform according to another embodiment of the present disclosure.
FIG. 9 is a schematic structural diagram of a specific structure of a based station according to an embodiment of the present disclosure.
FIG. 10 is a schematic structural diagram of the base station shown in FIG. 9 in another direction.
FIG. 11 is a schematic structural diagram of another base station according to an embodiment of the present disclosure.
FIG. 12 is a schematic structural diagram of the base station shown in FIG. 11 in another direction.
FIG. 13 is a schematic structural diagram of another base station according to an embodiment of the present disclosure.
FIG. 14 is a schematic structural diagram of the base station shown in FIG. 13 in another direction.
FIG. 15 is a schematic structural diagram of another base station according to an embodiment of the present disclosure.
FIG. 16 is a schematic structural diagram of a vehicle according to an embodiment of the present disclosure.

### REFERENCE NUMERALS

- 100: Base station
- 110: Controller
- 120: Operating platform
- 121: Transporting mechanism
- 122: Power source supplement device
- 123: Smart manipulator
- 124: Part replacement/maintenance device
- 125: Payload supplement device
- 126: Storage mechanism
- 1261: Storage rack
- 130: Landing platform
- 140: Transfer mechanism
- 150: Guiding mechanism
- 160: First power unit
- 161: Power component
- 162: Wire rope
- 170: Slide rail
- 180: Electric push rod
- 190: Power generation device
- 200: UAV
- 300: Vehicle
- 311: Body
- 302: Compartment

### DETAILED DESCRIPTION OF THE EMBODIMENTS

Technical solutions of the present disclosure will be described in detail with reference to the drawings. It will be appreciated that the described embodiments represent some, rather than all, of the embodiments of the present disclosure. Other embodiments conceived or derived by those having ordinary skills in the art based on the described embodiments without inventive efforts should fall within the scope of the present disclosure.

The base station and vehicle of the present disclosure will be described with reference to the accompanying drawings. In the case where there is no conflict between the exemplary embodiments, the features of the following embodiments and examples may be combined with each other.

### First Embodiment

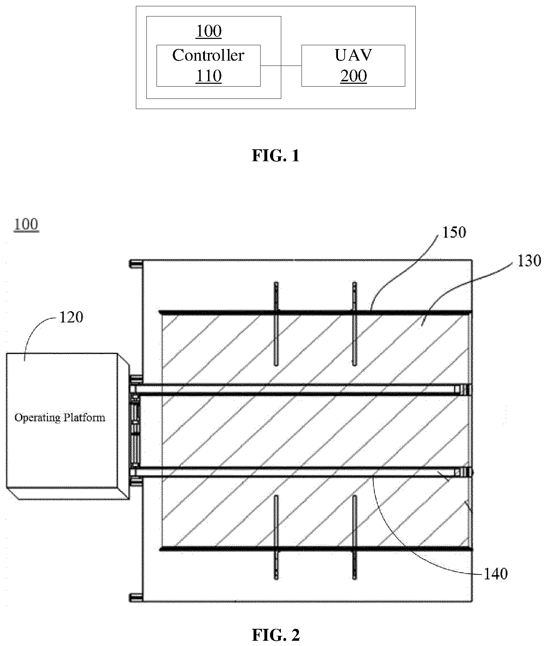

In an embodiment of the present disclosure, as shown in FIG. 1, a wireless communication can be established between a base station 100 and a UAV 200. The UAV 200 of this embodiment may include at least one of a plant protection UAV (used to sow deeds, spray pesticides, water, etc.), a logistics UAV (used to transport goods, perform delivery, etc.), and an industry application UAV (for energy inspection, infrastructure exploration, building surveying and mapping, etc.), and an aerial photography UAV.

Referring to FIG. 1 and FIG. 2, the base station 100 may include a controller 110, an operating platform 120, a landing platform 130, and a transfer mechanism 140. In some embodiments, the landing platform 130 and the operating platform 120 may be independent of each other, and the landing platform 130 may be adjacent to the operating platform 120. In some embodiments, the landing platform 130 and the operating platform 120 may be an integral structure. In this embodiment, the transfer mechanism 140 may be at least partially disposed on the landing platform 130. The transfer mechanism 140 can send the UAV that has landed on the landing platform 130 into the operating platform 120 and/or transfer the UAV stored on the operating platform 120 to the landing platform 130.

More specifically, the base station 100 of this embodiment can be used to perform the operation of recovering the UAV and/or the operation of releasing the UAV. In this embodiment, the controller 110 can trigger the base station 100 to perform the operation of recovering the UAV and/or the operation of releasing the UAV in response to detecting that the state of the UAV 200 meets a specific strategy or receiving a dispatch instruction, thereby realizing the dispatching of the UAV 200, such as releasing the UAV from the base station 100 that houses the UAV 200, the UAV 200, recovering the UAV performing the related tasks (such as sowing seeds, spraying pesticides or water, transporting goods, performing delivery, energy inspection, infrastructure exploration, building surveying, imaging, etc.) to the base station 100, etc. In some embodiments, the dispatch instruction may be sent by a remote control, or by a terminal communicating with the controller 110. In this embodiment, the dispatch instruction is used to instruct the base station 100 to perform the operation of recovering the UAV and/or the operation of releasing the UAV.

In some embodiments, during the operation of recovering the UAV, after the UAV 200 is landed on the landing platform 130, the controller 110 may control the transfer mechanism 140 to send the UAV 200 that landed on the landing platform 130 to the operating platform 120, and control the operating platform 120 to perform the corresponding operation on the UAV 200 located in the operating platform 120. The corresponding operation may include storing the UAV 200. In some embodiments, when the controller 110 detects that the state of the UAV 200 meets a specific strategy or receives a dispatch instruction, the controller 110 may send an instruction to instruct the UAV 200 to land to the UAV 200, and trigger the UAV 200 to land on the landing platform 130.

When performing the operation of releasing the UAV, the controller 110 may control the operating platform 120 to perform the corresponding operation. The corresponding operation may include releasing the UAV 200 stored in the operating platform 120. More specifically, the operating platform 120 may transport the UAV 200 stored in the operating platform 120 to the landing platform 130. Subsequently, the controller 110 may control the transfer mechanism 140 to transfer the UAV 200 to the landing platform 130. After being transferred to the landing platform 130, the UAV 200 may autonomously fly out and perform related tasks.

It can be understood that in this embodiment, the corresponding operation is related to the state of the UAV 200 or the dispatch instruction.

For example, in one embodiment, when the controller 110 detects that the UAV 200 performing the related task meets at least one of the condition of the power source of the UAV 200 is insufficient, the components of the UAV 200 are in a faulty state, the payload of the UAV 200 is insufficient, and the UAV meeting the conditions for data exchange with the base station 100, etc.; or when the controller 110 receives the dispatch instruction for instruction the base station 100 to perform the operation of recovering the UAV (i.e., to recover the UAV 200 that is performing the related tasks), the corresponding operation may at least include storing the UAV 200. Further, the corresponding operation may also include operations such as updating the power source of the UAV 200, replacing the parts of the UAV 200, supplementing the payload of the UAV 200, and performing data exchange with the UAV 200. Of course, the corresponding operation is not limited to the above operations, and may also include other operations.

The UAV may be driven to fly by electricity or fuel. In some embodiments, when the battery power of the UAV 200 is not greater than predetermined first power threshold, the power source of the UAV 200 may be determined as being insufficient. In some embodiments, when the amount of fuel in the fuel tank of the UAV 200 is not greater than a predetermined first fuel amount threshold, the power source of the UAV 200 may be determined as being insufficient. The first power threshold and the first fuel amount threshold may be set as needed.

In some embodiments, whether the payload of the UAV 200 is sufficient may be determined based on the payload type of the UAV 200. In some embodiments, the payload of the UAV may include at least one of pesticides, water, and seeds. If at least one of the pesticide dose of the UAV 200 is less than or equal to a predetermined first dose threshold, the water volume of the UAV 200 is less than or equal to a predetermined first water volume threshold, and the seed volume of the UAV 200 is less than or equal to a predetermined first seed volume threshold is detected, the payload of the UAV 200 may be determined to be insufficient. The first dose threshold, first water volume threshold, and the first seed volume threshold may be set as needed. It can be understood that the pesticides may include liquid pesticides and/or solid pesticides (such as powdered pesticides).

In some embodiments, the components of the UAV 200 may include a positioning device of the UAV 200 or other components. Take the positioning device of the UAV 200 as an example, when the UAV 200 detects that the positioning device of the UAV 200 cannot achieve positioning, the positioning device of the UAV 200 may be determined as in a malfunctioning state.

The data exchange between the UAV 200 and the base station 100 may include two types of links, one of which is from the UAV 200 to the base station 100, and the other one is from the base station 100 to the UAV 200. In some embodiments, when the controller 110 detects that the time between the current time and the time at which the UAV 200 exchanged data with the base station 100 last time meets a predetermined exchange period condition, or the data volume of the data information of the UAV 200 is greater than or equal to a predetermined data volume threshold, or the firmware of the UAV 200 needs to be updated (the firmware version of the UAV 200 may be outdated), the UAV 200 may be determined to be meeting the conditions for data exchange with the base station 100. In some embodiments, the data information of the UAV 200 may include at least one of the image data information obtained by a camera on the UAV 200, the flight trajectory information of the UAV 200, and the historical location data information of the UAV 200. The data information of the UAV 200 may also include other data information collected by the UAV 200 or other data information during the operation of the UAV 200.

It should be noted that when recovering the UAV 200, if the UAV 200 meets multiple specific strategies at the same time, the UAV 200 may be sent to the operating platform 120 to perform operations corresponding to each specific strategy. For example, when the power source of the UAV 200 is insufficient and the parts are faulty, it may be sent to the operating platform 120 to replace the power source and parts. The UAV 200 may detect itself, and when the detection result meets a specific strategy, it may send a landing request to the base station 100 to enter the operating platform 120 for operation. Alternatively, the UAV 200 may send its own data to the base station 100, and the base station 100 may obtain the detection result based on analyzing the data of the UAV 200. When the detection result meets the specific strategy, a landing notification may be sent to the UAV 200, such that operation maybe performed on the landed UAV 200 on the operating platform 120.

In another embodiment, when the controller 110 detects that the UAV 200 stored in the operating platform 120 meets at least one of a completion of the power source supplement, a completion of payload supplement, a completion of part replacement/maintenance, and a completion of data exchange between the UAV 200 and the base station 100, etc., or when the controller 110 receives a dispatch instruction for instructing the base station 100 to perform the operation of releasing the UAV (i.e., releasing the UAV 200 stored in the operating platform 120 to perform related tasks, the corresponding operation may at least include releasing the UAV 200 stored in the operating platform 120.

In some embodiments, the completion of power source supplement may be that the battery power of the UAV 200 is greater than a second power threshold, or the fuel of the UAV 200 is greater than the second fuel threshold. The second power threshold and the second fuel threshold may be set based on actual needs. The completion of payload supplement may be that the pesticide dose of the UAV 200 is greater than a predetermined second pesticide dose threshold, the water volume of the UAV 200 is greater than a predetermined second water volume threshold, and/or the seed volume of the UAV 200 is greater than a predetermined second seed volume threshold. The second pesticide dose threshold, the second water volume threshold, and the second seed volume threshold may be set based on actual needs. The completion of part replacement/maintenance may be that the parts are switched from the faulty state to the normal working state. For example, the positioning device may switch from being unable to position or having a relatively large position deviation to position the position deviation within an allowable range. The completion of data exchange between the UAV 200 and the base station 100 may be that the base station 100 has downloaded the current data information (data information stored during the execution of related tasks before the UAV 200 is recovered to the base station 100) of the UAV 200, and the base station 100 has completed the firmware upgrade of the UAV 200, and so on. In some embodiments, the data information of the UAV 200 may include at least one of the image data information obtained by a camera on the UAV 200, the flight trajectory information of the UAV 200, and the historical location data information of the UAV 200. The data information of the UAV 200 may also include other data information collected by the UAV 200 or other data information during the operation of the UAV 200. In addition, after the base station 100 has downloaded the current data information of the UAV 200, it may instruct the UAV 200 to delete the current data information in the UAV 200, such that the UAV 200 may have sufficient storage space during the execution of related tasks after flying out.

In some embodiments, after the base station 100 sends the UAV 200 out, the UAV 200 may continue to interaction with the base station 100 during the execution of related tasks, such that the base station 100 can obtain the position, power, payload, and other state information of the UAV 200 in time, thereby determining whether triggering the base station 100 to perform the recovery of the UAV is needed based on the state information fed back by the UAV 200. After the UAV 200 flies out of the base station 100, it may perform an action based on a predetermined program, or based on an operating instruction sent by the base station 100 (the operating instruction may be predetermined in the base station 100 and called when needed), or based on the pilot's operating instruction. The action may include the UAV 200 performing related tasks in a designated area, such as spraying pesticides at designated spraying locations. In this embodiment, after the UAV 200 flies out of the base station 100, if the UAV 200 does not receive an operating instruction sent by the pilot through the remote control or terminal, the UAV 200 may act based on the operating instruction sent by the base station 100 by default. If the operating instruction sent by the pilot through the remote control or terminal is received, the UAV 200 may act based on the operating instruction sent by the pilot through the remote control or terminal, such that the actions and positions of the UAV 200 may be within a controllable range of the base station 100. In this embodiment, for the UAV 200, the priority of the operating instruction sent by the pilot through the remote control or terminal may be higher than the operating instruction sent by the base station 100, thereby meeting the user's current control requirements for the UAV 200.

It can be understood that the controller 110 controlling the 120 to perform operations such as updating the power source of the UAV 200, replacing the parts of the UAV 200, supplementing the payload of the UAV 200, and performing data exchange with the UAV 200 may be performed by the operating platform 120 during the process of recovering the UAV, or performed by the operating platform 120 during the process of releasing the UAV. In some embodiments, in the process of releasing the UAV, the process of the controller 110 controlling the operating platform 120 perform operations such as updating the power source of the UAV 200, replacing the parts of the UAV 200, supplementing the payload of the UAV 200, and performing data exchange with the UAV 200 may need to be performed before the controller 110 controls the operating platform 120 to send the stored UAV to the transfer mechanism 140.

In some embodiments, if the controller 110 detects that the state of the UAV 200 meets a specific strategy and receives a dispatch instruction at the same time, the controller 110 may control the operating platform 120 to perform the corresponding operation based on the dispatch instruction. That is, the priority of the dispatch instruction may be higher than the priority of the controller 110 controlling the base station 100 to work based on the state of the UAV 200.

In some embodiments, the transfer mechanism 140 may be positioned in the middle of the landing area corresponding to the landing platform 130, or may be positioned in other positions of the landing area. The purpose is to transfer the UAV 200 that landed on the landing platform 130 to the operating platform 120, or to transfer the UAV 200 in the operating platform 120 to the landing platform 130 to prepare for take-off.

The structure of the transfer mechanism 140 may be designed as needed. The transfer mechanism 140 in this embodiment is a conveying belt, and the number of conveying belt may include one, two, or more. It can be understood that in other embodiments, the transfer mechanism 140 may also be a conveying chain, a conveying belt, a roller, and other devices capable of transferring.

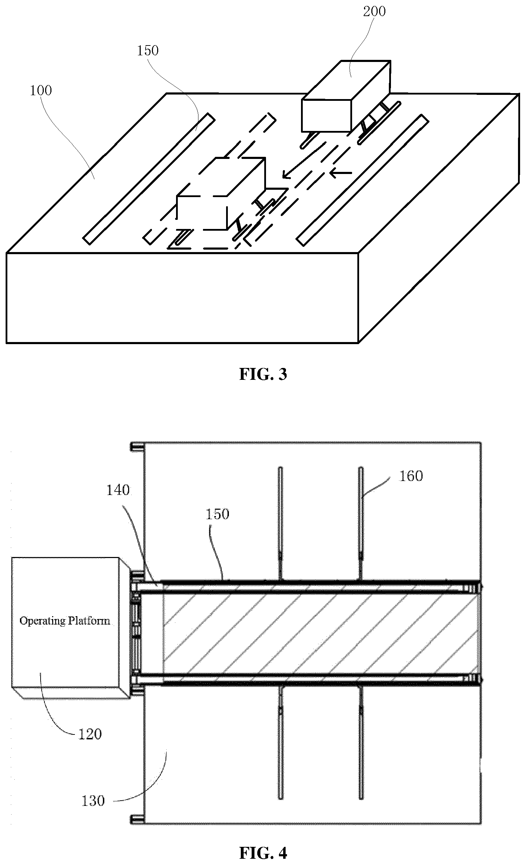

As shown in FIG. 2 to FIG. 5, the base station 100 may also include a guiding mechanism 150 disposed on the landing platform 130 and movably arranged relative to the transfer mechanism 140, and a first power unit 160 for driving the guiding mechanism 150 to move. The first power unit 160 may be used to drive the guiding mechanism 150 to move relative to the transfer mechanism 140, thereby positioning the UAV 200 landing on the landing platform 130 to the transfer mechanism 140. As such, when the transfer mechanism 140 is moving, the UAV 200 can be moved in the direction from the landing platform 130 to the operating platform 120. By setting the guiding mechanism 150, even if there is a relatively large error in the positioning where the UAV 200 is automatically landed without the pilot's operation, the UAV 200 may still be transferred to the transfer mechanism 140 through the guiding mechanism 150 and transport to the UAV 200 to the operating platform 120, thereby realizing the automatic recovery of the UAV 200.

In some embodiments, the structure of the guiding mechanism 150 may be designed as needed. In this embodiment, the guiding mechanism 150 may include a guiding plate. The guiding plate of this embodiment may cooperate with the UAV 200. When the guiding plate moves toward the transfer mechanism 140, the UAV 200 may be pushed to move to the transfer mechanism 140. More specifically, the UAV 200 may include a landing gear, and the guiding plate may abut or connect with the landing gear, thereby pushing the UAV 200 to move.

In one embodiment, referring to FIG. 2 to FIG. 5, there are two conveyor belts, a first conveyor belt and a second conveyor belt, respectively, and the first conveyor belt and the second conveyor belt are disposed at intervals. The guiding mechanism 150 may include two guiding plates, a first guiding plate and a second guiding plate, respectively, and the first guiding plate and the second guiding plates may be positioned on both sides of the two conveyor belts. The landing gear may include a first landing gear and a second landing gear. When the UAV 200 lands on the landing platform 130, the first power unit 160 may drive the first guiding plate and/or the second guiding plate to move, such that the first guiding plate may cooperate with the first landing gear, and/or the second guiding plate may cooperate with the second landing gear to push the first landing gear onto the first conveyor belt, and push the second landing gear onto the second conveyor belt.

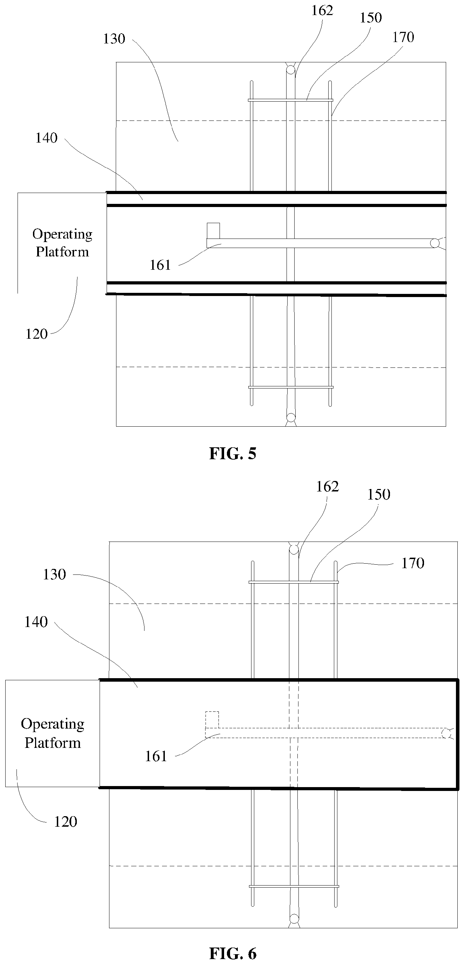

In another embodiment, referring to FIG. 6, there is one conveyor belt, and the guiding mechanism 150 includes two guiding plates, the first guiding plate and the second guiding plate, respectively, and the first guiding plate and the second guiding plate are positioned on sides of the conveyor belt. The landing gear may include the first landing gear and the second landing gear. After the UAV 200 has landed on the landing platform 130, the first power unit 160 may drive the first guiding plate and/or the second guiding plate to move, such that the first guiding plate may cooperate with the first landing gear, and/or the second guiding plate may cooperate with the second landing gear to push the first landing gear and the second landing gear onto the conveyor belt.

Further, referring to FIG. 5 and FIG. 6, the base station 100 further includes a slide rail 170, and the guiding plate can cooperate with the slide rail 170. The first power unit 160 can drive the guiding plate to move, and the guiding plate can move along the slide rail 170 to move toward or away from the transfer mechanism 140.

The structure of the first power unit 160 may be designed as needed. Referring to FIG. 5, the first power unit 160 in this embodiment includes a power component 161 and a wire rope 162, and the wire rope 162 is connected to the guiding plate. The power component 161 can drive the wire rope 162 to move, and drive the guiding plate to move toward or away from the transfer mechanism 140. In some embodiments, the power component 161 may be an electric pole, a motor, or other power devices. The wire rope 162 may be replaced with ropes of other materials.

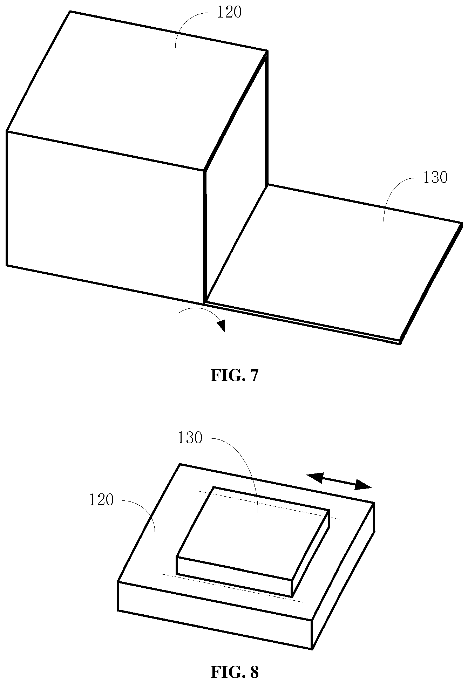

In a possible implementation, the landing platform 130 and the operating platform 120 may be independent of each other, and the landing platform 130 may be adjacent to the operating platform 120. In some embodiments, referring to FIG. 7 and FIG. 8, the landing platform 130 is connected to the operating platform 120, and the landing platform 130 can be switched between a storage state and an extended state relative to the operating platform 120. When the landing platform 130 is in the extended state, it can be used for the UAV 200 to land. In this way, when the landing platform 130 is extended relative to the operating platform 120, it can provide an operating place for the take-off or landing of the UAV 200, and when the UAV 200 does not need to take-off or land, the landing platform 130 can be stored to avoid occupying space, or avoid the landing platform 130 from shaking due to external factors, etc.

In one embodiment, referring to FIG. 7, in this embodiment, the landing platform 130 can be rotated relative to the operating platform 120. When the landing platform 130 and the operating platform 120 are in a first relative position relationship, the landing platform 130 may be in the extended state. When the landing platform 130 and the operating platform 120 are in a second relative position relationship, the landing platform 130 may be in the storage state. As shown in FIG. 7, when the landing platform 130 rotates to a substantially horizontal position relative to the operating platform 120, the landing platform 130 is in an extended state; and when the landing platform 130 rotates in the opposite direction to a positive substantially perpendicular to the horizontal plane, the landing platform 130 is in a storage state.

In this embodiment, the landing platform 130 and the operating platform 120 may be connected by a rotating shaft, which can be rotated by a motor, thereby realizing the relative rotation between the landing platform 130 and the operating platform 120. Alternatively, the rotation of the landing platform 130 may also be realized by an electric push rod 180. Of course, the rotation arrangement between the operating platform 120 and the landing platform 130 may also be realized in other ways.

In another embodiment, referring to FIG. 8, the landing platform 130 is movable relative to the operating platform 120. When the landing platform 130 moves into the operating platform 120, the landing platform 130 may be in a storage state; when the landing platform 130 is partially moved outside the operating platform 120, the landing platform 130 may be in an extended state.

For example, in FIG. 8, each side of the landing platform 130 does not exceed the outermost side of the operating platform 120. At this time, the landing platform 130 is in the storage state. When the landing platform 130 partially moves to exceed the outermost side of the operating platform 120, the landing platform 130 is in the extended state. For example, one-half of the landing platform 130 may be positioned outside the operating platform 120, or two-thirds of the landing platform 130 may be positioned outside the operating platform 120. Of course, one-third of the landing platform 130 or other proportions may be positioned outside the operating platform 120.

In this embodiment, the operating platform 120 may include a sliding groove, and a sliding block may be disposed on the landing platform 130 to cooperate with the sliding groove, thereby realizing the movable arrangement between the operating platform 120 and the landing platform 130 through the cooperation of the sliding groove and the sliding block. The sliding groove and the sliding block may be driven by a motor. Alternatively, the movable arrangement of the landing platform 130 may also be realized by an electric push rod. Or, the movable arrangement of the landing platform 130 may also be realized through the cooperation between the motor and a lead screw. Of course, the movable arrangement between the operating platform 120 and the landing platform 130 may also be realized in other ways.

FIG. 7 and FIG. 8 illustrate the relative positional relationship between the operating platform 120 and the landing platform 130 in the present disclosure, which simplify the operating platform 120 and the landing platform 130 to a certain extend. In practice, they may include other structures.

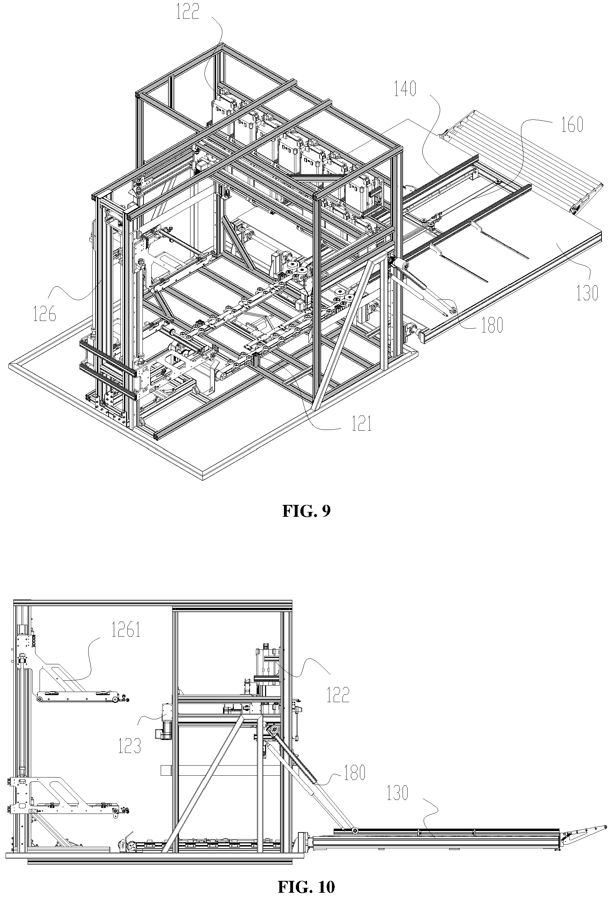

As shown in FIG. 9 and FIG. 10, the landing platform 130 in this embodiment is in the extended state relative to the operating platform 120, and the landing platform 130 can be rotated relative to the operating platform 120 under the action of the electric push rod 180.

In another possible implementation, the landing platform 130 and the operating platform 120 may be an integral structure. For detail, reference may be made to the description of the operating platform 120 in the subsequent embodiments.

Further, in order to enable to UAV 200 sent by the transfer mechanism 140 into the operating platform 120 to be transported to a suitable position for operation, the operating platform 120 may further include a transporting mechanism 121. The transporting mechanism 121 may be used to transport the UAV 200 that is sent into the operating platform 120, such that the operating platform 120 can perform one or more operations on the UAV 200 at the correspond position, or transport the UAV 200 in the operating platform 120 to the transfer mechanism 140.

In some embodiments, the transfer mechanism 140 and the transporting mechanism 121 may be two independent mechanisms that cooperate with each other. In some embodiments, the transfer mechanism 140 and the transporting mechanism 121 may be integrated. In this embodiment, the transporting mechanism 121 is adjacent and independent of the transfer mechanism 140, and the transporting mechanism 121 is positioned on one side of the transporting direction of the transfer mechanism 140, such that the UAV 200 positioned on the transfer mechanism 140 can be output from the transfer mechanism 140 to the transporting mechanism 121.

The structure of the transporting mechanism 121 may be designed as needed, and it may extend in all directions to facilitate the transportation of the UAV 200 to a suitable position for operation. The transporting mechanism 121 in this embodiment may be a conveyor belt, and the number of conveyor belt may include one, two, or more. It can be understood that in other embodiments, the transporting mechanism 121 may also be a conveying chain, a roller, or other devices that can realized the transportation. The transporting mechanism 121 used to move the UAV 200 to various positions may be an integrated structure, or may be an independent transporting mechanisms 121 connecting to each other to realize the transportation of the UAV 200.

In the foregoing embodiments, the operating platform 120 may also include a structure for performing the corresponding operations on the UAV 200. The following example describes the structure for performing operations on the UAV 200.

In one embodiment, the operating platform 120 may include a power source supplement device 122. The power source supplement device 122 may be used to supplement the power source of the UAV 200 at the first predetermined position (which can be the UAV 200 that is delivered to the operating platform 120 during the recovery process and located at the first predetermined position, or the UAV 200 that is stored in the operating platform 120 and located at the first predetermined position during the process of releasing the UAV) in the operating platform 120. For the UAV 200 with insufficient power source or no power source, the UAV 200 may be transported by the transporting mechanism 121 to deliver the UAV 200 to the first predetermined position, the first predetermined position may accommodate one or more UAVs 200.

In some embodiments, after the UAV 200 reaches the first predetermined position, it can be restricted by a locking component located on the transporting mechanism 121 to prevent to UAV 200 from moving or shaking during the supplementation of the power source. Alternatively, after the UAV 200 reaches the first predetermined position, it can also be locked first by the locking component on the power source supplement device 122, and then the power source can be supplemented. Or, other structures different from the transporting mechanism 121 and the power source supplement device 122 may also be used to lock the UAV 200.

The power source that can be supplemented by the power source supplement device 122 may be determined based on the power type of the UAV 200. For example, when the UAV 200 uses electricity as the power source, the power source supplement device 122 may include a charging pile or a battery replacement device. When the UAV 200 uses fuel as the power source, the power source supplement device 122 may include a refueling device. Of course, the same UAV 200 may also be capable of using electricity and fuel as power sources. Based on this, the power source supplement device 122 may also include one or more of a charging pile, a battery replacement device, and a refueling device. When the UAV 200 is configured with other power sources different from electricity and fuel, the power source supplement device 122 may also include other devices different from the above examples.

The following is a detailed description of the technical solution of the present disclosure with respect to the foregoing three example power source supplement devices 122.

In one embodiment, the power source device may include a charging pile. The charging pile may be used to charge the built-in battery of the UAV 200 that is sent to the first predetermined position in the operating platform 120, or charge the dissembled battery removed from the UAV 200. Alternatively, when the UAV 200 includes multiple batteries, the charging pile may charge the disassembled battery while charging the built-in battery.

In some embodiments, the charging pile may include a plurality of charging interfaces, and plurality of charging interfaces may include a first interface adapted to the port on the body of the UAV 200 and a second interface adapted to the battery. When the UAV 200 sent to the first predetermined position has a built-in battery, the first interface may be used to charge the UAV 200. When the UAV 200 sent to the first predetermined position is removed, the second interface may be used to charge the removed battery. In some embodiments, when the UAV 200 includes a plurality of batteries, the built-in, unremoved battery may be charged through the first interface, and the removed battery may be charged through the second interface. The plurality of batteries may include a main battery and a backup battery, and the removed battery may be the main battery or the backup battery.

More specifically, the controller 110 may obtain the respective idle states of the plurality of charging interfaces on the charging pile, such that when the UAV 200 has a charging need, it can select an idle charging interface for the built-in battery or the removed battery of the UAV 200 to be charged. In one embodiment, the controller 110 may obtain the idle state of the first interface. When the UAV 200 when the built-in battery is sent to the first predetermined position, the base station 100 may select the idle first interface to charge the built-in battery. In another embodiment, the controller 110 may obtain the idle state of the second interface to select the idle second interface to charge the dissembled battery removed from the UAV 200.

For the disassembly of the battery on the UAV 200, more specifically, the operating platform 120 may further include a smart manipulator 123. The smart manipulator 123 may be disposed adjacent to the charging pile or on the charging pile, such that the battery can be removed from the UAV 200 through the smart manipulator 123, and/or mounted the battery charged on the charging pile to the UAV 200. The smart manipulator 123 may include a six-degree-of-freedom manipulator.

After the UAV 200 has landed, it may be powered off autonomously or under the control of the base station 100, and then the battery may be removed through the smart manipulator 123 to avoid hardware of software failures caused by the forced power-off of the battery. Alternatively, the smart manipulator 123 may also remove the battery without cutting off the power, especially when the UAV 200 has a backup battery and has a hot-swappable function, it may remove the battery without cutting off the power, which can also reduce the damage to the UAV 200. Of course, when there is no back-up battery, the smart manipulator 123 may also remove the battery without cutting off the power.

The arrangement of the smart manipulator 123 adjacent to the charging pile may include, based on the transporting direction of the transporting mechanism 121, disposing the smart manipulator 123 behind the charging pile, such that the smart manipulator 123 can remove the battery before the UAV 200 reaches the charging pile; or, disposing the smart manipulator 123 in front of the charging pile, such that the battery may be mounted when the UAV 200 is transported to the next position. Of course, in other embodiments, the smart manipulator 123 and the charging pile may also be positioned on opposite sides of the transporting mechanism 121, or may be positioned in other positions.

When the controller 110 obtains that the power of a plurality of UAVs 200 are lower than the second predetermined threshold, it may control the charging pile to start and prepare to charge the UAVs 200 below the second predetermined threshold. The second predetermined threshold may be one of 20%, 30%, and 40% of the total power capacity. Alternatively, each UAV 200 sent into the operating platform 120 may also be charged.

In one embodiment, the plurality of UAVs 200 that are sent into the operating platform 120 and whose power are lower than the second predetermined threshold may be transported by the transporting mechanism 121 to the first predetermined position corresponding to the charging pile in sequence, and charging may be performed through the idle first interface on the charging pole and the interface on the UAV 200. Other UAVs 200 whose power are higher than the second predetermined threshold may be transported to other stations through the transporting mechanism 121 to achieve corresponding operations.

In another embodiment, the plurality of UAVs 200 that are sent into the operating platform 120 and whose power are lower than the second predetermined threshold may be transported by the transporting mechanism 121 to the position of the smart manipulator 123, such that the smart manipulator 123 may first remove the battery, and then the battery may be transported to the first predetermined position through the smart manipulator 123, and charged through the second interface.

In some embodiments, the sequence of the plurality of UAVs 200 whose power are lower than the second predetermined threshold may be the sequence when the base station 100 controls the UAVs 200 to land. For example, when the plurality of UAVs 200 with charging needs arrive at the base station 100 at the same time, the base station 100 may obtain the specific power value of the plurality of UAVs 200 based on the signals obtained from each UAV 200. In this way, the plurality of UAVs 200 may be controlled to be sorted based on the power value, and land on the landing platform 130 one by one, such that they can be transferred to the operating platform 120 one by one. Alternatively, the base station 100 may also control the landing sequence of the UAVs 200 without sorting, and instruct the UAVs 200 to land one by one based on the landing sequence, such that the charging pile can give priority to charging the UAVs 200 with insufficient power.

When the built-in battery or the disassembled battery of the UAV 200 is cooperated with the corresponding charging interface and is in a charging state, the controller 110 may further monitor the power of the UAV 200 or the battery and turn off the charging pile when the power is greater than or equal to the first predetermined threshold, or disconnect the electrical connection between the charging pile and the UAV 200 or between the charging pile and the battery to avoid causing damage by overcharging. The first predetermined threshold may be one of 80%, 90%, and 100% of the total power capacity.

In one embodiment, the controller 110 may monitor the power of the built-in battery of the UAV 200 that is adapted to the first interface, and when the power of the built-in battery exceeds the first predetermined threshold of the total power capacity of the built-in battery, the electrical connection between the first interface and the UAV 200 may be disconnected. In another embodiment, the controller 110 may detect the power of the removed battery that is adapted to the second interface, and when the power of the removed battery exceeds the first predetermined threshold, the electrical connection between the second interface and the UAV 200 may be disconnected.

Alternatively, the power source device may further include a refueling device. The refueling device may be used to supplement the amount of fuel for the UAV 200 sent to the first predetermined position in the operating platform 120. The refueling device include a diesel device, a gasoline device, and the like. For the operation process, reference may be made to the charging pile mentioned above.

Alternatively, the power source device may include a battery replacement device, and the battery replacement device may store a plurality of batteries with sufficient power. When the UAV 200 whose power is lower than the second predetermined threshold is sent to the first predetermined position, the battery in the UAV 200 may be removed by the smart manipulator 123, and then a fully charged battery may be taken from the battery replacement device and mounted on the UAV 200. In some embodiments, the battery removed from the UAV 200 may also be recycled into the battery replacement device through the smart manipulator 123, or the battery replacement device may also include a battery charging interface, and the battery removed from the UAV 200 may be plugged into the battery charging interface through the smart manipulator 123 for charging.

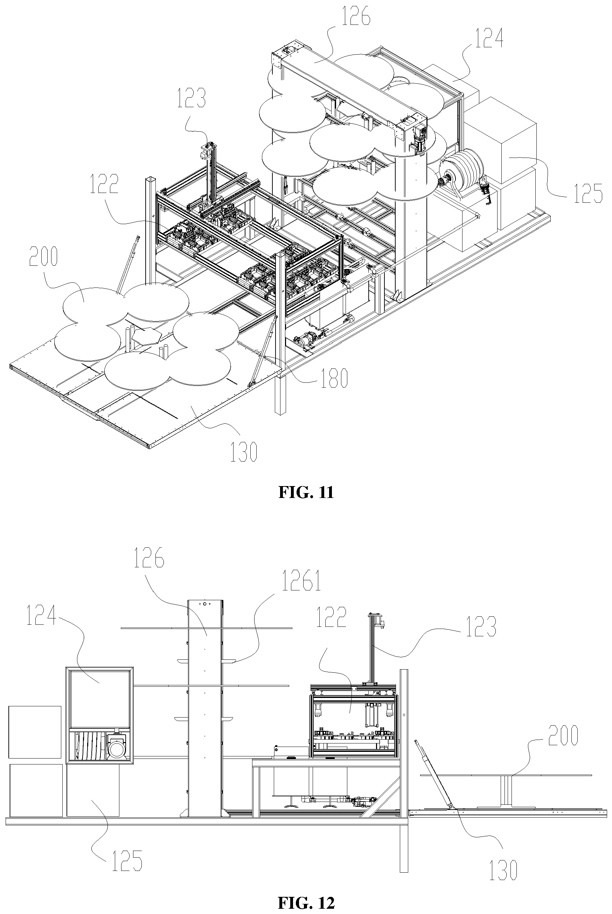

Similarly, refer to the power source device that supplements the power source of the UAV 200 at the first predetermined position in the operating platform 120, as shown in FIG. 11 and FIG. 12. In one embodiment, the operating platform 120 may further include a part replacement/maintenance device for replacing or maintaining faulty parts of the UAV 200 located at a second predetermined position. The components may include bolts, propellers, positioning sensors, cameras, and other components. In another embodiment, the operating platform 120 may further include a payload supplement device 125 for supplementing the payload of the UAV 200 located at a third predetermined position. There may be an overlapping positions among the first predetermined position, the second predetermined position, and the third predetermined position, thereby achieving a compact structure in the operating platform 120 and reducing the space occupation of the base station 100.

For example, as shown in FIG. 9 and FIG. 10, the first predetermined position, the second predetermined position, and the third predetermined position may all overlap. As such, while supplementing the power source of the UAV 200, the faulty parts can be replaced for the UAV 200, and the payload can be supplemented for the UAV 200. Alternative, two of the predetermined positions may overlap. For example, as shown in FIG. 11 and FIG. 12, the second predetermined position and the third predetermined position overlap, such that the supplementation of the payload can be performed while replacing the parts of the UAV 200. Alternatively, the first predetermined position and the third predetermined position may overlap, such that the payload may be supplemented while the power source is being supplemented. Alternatively, the first predetermined position and the third predetermined position may overlap, such that the faulty parts may be replaced while the power source is being supplemented. Of course, other overlapping situations may also be included, which will not be repeated here.

In some embodiments, the payload that the payload supplement device 125 can supplement may match the payload type of the UAV 200. For example, when the UAV 200 is a plant protection UAV 200, the payload supplement device 125 may include one or more of a pesticide supplement device, a water supplement device, and a seed supplement device. When the UAV 200 is a logistics UAV 200, the payload supplement device 125 may include a logistic payload supplement device 125. More specifically, it may include one or more of a package supplement device and a cargo supplement device. Of course, for the operating conditions of the UAV 200, the payload supplement device 125 may also include other types.

In one embodiment, the pesticide supplement device may include one or more of a liquid pesticide supplement device and a solid pesticide supplement device. When the pesticide supplement device supplements both liquid pesticides and solid pesticides for the UAV 200, the UAV 200 may mix the liquid pesticides and solid pesticides and spray them, or spay them separately. In another embodiment, the pesticide supplement device may include a water tank, a pesticide stock solution tank, and a mixing tank. The pesticide supplement device may also draw water in the water tank and pesticides in the pesticide stock solution tank into the mixing tank based on a specific ration, and the pesticide stock solution and water may be mixed in the mixing tank to obtain a mixed chemical solution that can be supplemented to the UAV 200.

Based on the technical solution of the present disclosure, in one embodiment, after the UAV 200 sent into the operating platform 120 completes one or more operations including power source supplementation, payload supplementation, and faulty part replacement/maintenance, it may be transported to the landing platform 130 to fly out again to perform related tasks. In another embodiment, the UAV 200 sent into the operating platform 120 may be temporarily stored, and then fly out from the landing platform 130 to perform operation after receiving the instruction.

In some embodiments, as shown in FIG. 9 to FIG. 12, the operating platform 120 may further include a storage mechanism 126. The storage mechanism 126 may be used to store a plurality of UAVs 200 that are sent into the operating platform. In some embodiments, the UAV 200 sent to the operating platform 120 may be directly transported to the storage mechanism 126 through the transporting mechanism 121 for storage.

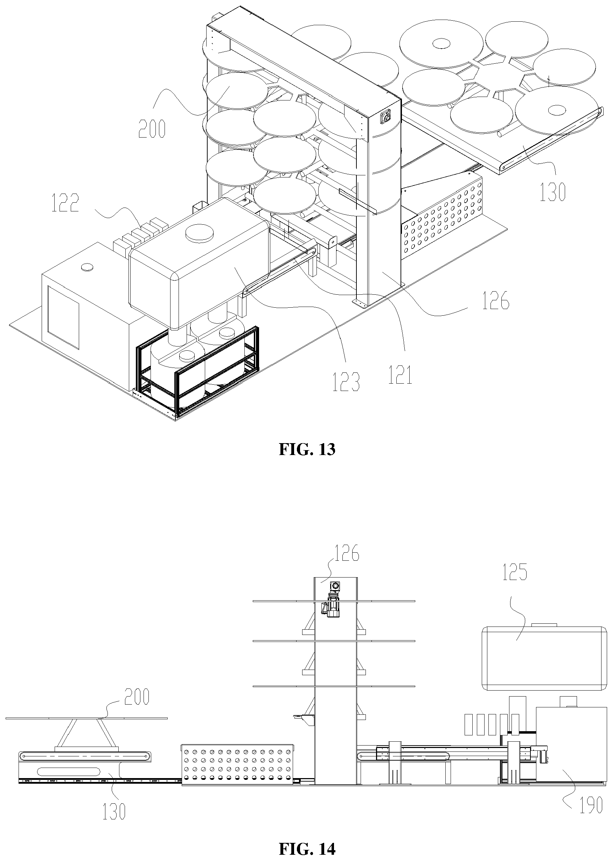

In some embodiments, as shown in FIG. 13 and FIG. 14, in this embodiment, the landing platform 130 may be movably disposed relative to the operating platform 120, and the 130 may be current in the extended state. In this embodiment, the third predetermined position for supplementing the payload of the UAV 200 may overlap with the first predetermined position for supplementing the power source, and the storage mechanism 126 may be positioned in the area where the first predetermined position and the third predetermined position overlap. Therefore, the power source and the payload of the UAV 200 may be supplemented when the UAV 200 is stored.

Of course, in other embodiments, when the storage mechanism 126 is positioned at the second predetermined position for replacing the faulty parts of the UAV 200, the part replacement/maintenance operation for the UAV 200 may be performed when the UAV 200 is stored. Alternatively, there may be other positional relationships between the position of the storage mechanism 126 and the first predetermined position, the second predetermined position, and the third predetermined position, which will not be repeated here.

In some embodiments, one or more operations of power source supplementation, payload supplementation, and faulty part replacement/maintenance may be performed when the UAV 200 receives an instruction to perform operation again and is transported from the storage mechanism 126 to the transporting mechanism 121.

In some embodiments, one or more operations of power source supplementation, payload supplementation, and faulty part replacement/maintenance may be performed on the UAV 200 sent to the operating platform 120 when the transporting mechanism 121 transports the UAV 200 to the 126 for storage. Of course, it is possible to complete various operations on the UAV 200 through the sum of the operations performed in each of the above process.

In this embodiment, the storage mechanism 126 may store a plurality of UAVs 200, and the storage mechanism 126 may have various structures.

In one embodiment, the storage mechanism 126 may include a plurality of storage racks 1261. As shown in FIG. 9 to FIG. 14, the plurality of storage racks 1261 are disposed along a direction perpendicular to the transporting direction of the transfer mechanism 140. Since the transporting direction of the transfer mechanism 140 is substantially along the landing plane of the landing platform 130, the stacking direction of the plurality of storage racks 1261 may be substantially perpendicular to the landing plane of the landing platform 130.

In some embodiments, the storage mechanism 126 may be movably disposed along the mounting direction of the storage racks 1261, thereby storing the UAV 200 currently being sent into the operating platform 120 into an idle storage rack 1261. For example, the idle storage rack 1261 that is the farthest from the landing platform 130 among the plurality of storage racks 1261 may be moved to be substantially flush with the transporting mechanism 121 in the direction perpendicular to the landing platform 130. A first UAV 200 to be stored transported by the transporting mechanism 121 may be first stored to the idle storage rack 1261 that is farthest from the landing platform 130, then before a second UAV 200 to be stored arrives, the storage rack 1261 may move upwards, such that the storage rack 1261 storing the UAV 200 may be kept away from the transporting mechanism 121. The idle storage rack 1261 positioned below the storage rack 1261 that has stored the UAV 200 may be substantially flush with the transporting mechanism 121, and may be used to store the second UAV 200, and so on. The storage racks 1261 may store a plurality of UAVs 200 in sequence.

In one embodiment, as shown in FIG. 13, the structure of each storage rack 1261 is similar to a drawer, including an extended state and a storage state. In this embodiment, when the storage rack 1261 is in the extended state, it can be used as the landing platform 130 of the storage rack 1261. After the UAV 200 lands on the storage rack 1261, the storage rack 1261 may switch from the extended state to the storage state, and the UAV 200 can be stored.

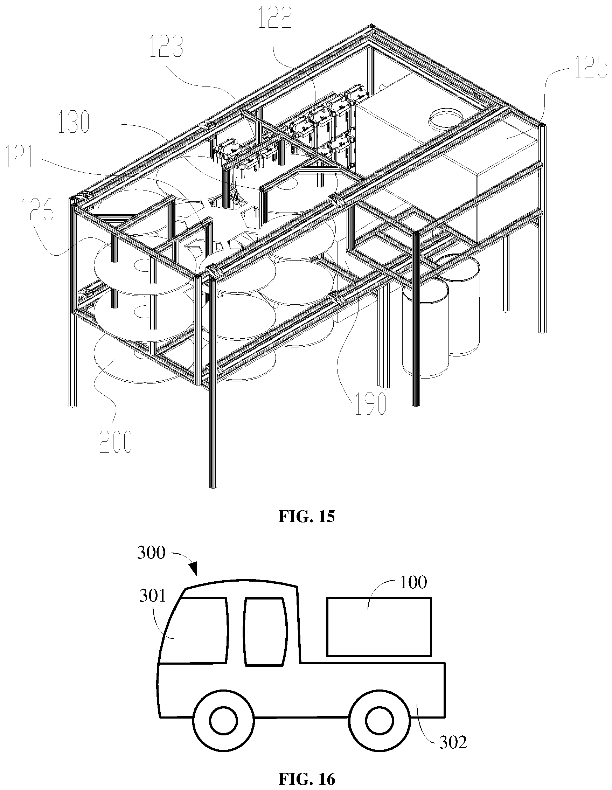

In another embodiment, as shown in FIG. 15, the plurality of storage racks 1261 included in the storage mechanism 126 may be disposed along the transporting direction of the transfer mechanism 140. Since the transporting direction of the transfer mechanism 140 is substantially along the landing plane of the landing platform 130. Therefore, the stacking direction of the plurality of storage racks 1261 may be substantially parallel to the landing plane of the landing platform 130.

In some embodiments, landing platform 130 may be a side surface of the operating platform 120 perpendicular to the transporting direction. After the UAV 200 lands on the landing platform 130 and positioned to the transfer mechanism 140, it may be transported to the transporting mechanism 121 through the transfer mechanism 140. With the limit of the transporting mechanism 121 and along with the transportation of the transporting mechanism 121, the UAV 200 may be transported to the idle storage rack 1261 along the transporting direction.

In some embodiments, the UAV 200 that landed first may be stored on the idle storage rack 1261 that is the farthest from the landing platform 130 to avoid occupying the storage rack 1261 located on the upper, which may cause subsequently transportation blockage. When the UAV 200 to be stored needs to be exported from the storage mechanism 126, the principle of first-in-last-out may be adopted, and the UAV 200 that is stored may be called first.

In one embodiment, as shown in FIG. 11 to FIG. 14, the storage mechanism 126 may be disposed between the landing platform 130 and the charging pile, such that the UAV 200 sent into the operating platform 120 can be stored at the position of the charging pile after sufficient power has been supplemented. Alternatively, the power may be supplemented during the transportation from the storage mechanism 126 to the landing platform 130.

In another embodiment, as shown in FIG. 9 and FIG. 10, the charging pile is adjacent to the landing platform 130, and the storage mechanism 126 is disposed on a side of the charging pile away from the landing platform 130. In some embodiments, it may be the side adjacent to the charging pile away from the landing platform 130, or the other side of the charging pile (the side of the non-charging pile adjacent to the landing platform 130), which may be convenient for the smart manipulator 123 to remove the battery from the UAV 200 stored in the storage mechanism 126 and put it into the charging pile for charging or, mount the battery charged on the charging pile on the UAV 200 stored in the storage mechanism 126.

The base station 100 provided by the present disclosure may further include a power generation device 190. The power generation device 190 may be used to at least supply power to the operating platform 120, the landing platform 130, the controller 110, and the transfer mechanism 140. Of course, it may also supply power to the storage mechanism 126, the transporting mechanism 121, the charging pile, the payload supplement device 125, the smart manipulator 123, and the like.

The base station 100 provided by the present disclosure may further include a security area for storing items. The item may be a kit related to the UAV 200, or it may be a daily item related to the pilot.

The base station 100 of the embodiments of the present disclosure can realize the automatic recovery and release of the UAV 200 through the cooperation between the operating platform 120, the landing platform 130, the transfer mechanism 140, and the controller 110 when it is needed to dispatch the UAV 200 or detecting that the UAV 200 meets a specific strategy (when it is recovered or released). In addition, during the recovery or release process, processes such as power source replacement, part maintenance, payload supplementation, data exchange, and UAV 200 storage can be performed on the UAV 200 through the operating platform 120 to ensure that the UAV 200 can maintain normal working condition and can be directly used to perform related tasks subsequently. The recovery and release process of the UAV 200 does not involve manual participation, and the base station 100 is highly intelligent, thereby avoiding time waste caused by manual operation to perform operations such as power source replacement, part maintenance, payload supplementation, data exchange, UAV storage, etc.

### Second Embodiment

Referring to FIG. 16, the second embodiment of the present disclosure provides a vehicle 300. The vehicle may include a body 301 and a base station 100. In some embodiments, the base station may be disposed on the body, and the structure of the base station may be the same as that of the above-mentioned First Embodiment. For detail, reference may be made to the description of the above-mentioned First Embodiment, which will not be repeated here.

In this embodiment, the vehicle 300 may include a compartment 302, the operating platform 120 may be disposed in the compartment 302, and the landing platform 130 may include at least one side door of the compartment 302.

In one embodiment, the landing platform 130 may be the top side door of the compartment 302, and the top side door may also become a part of the operating platform 120 at this time.

In another embodiment, the landing platform 130 may include a rear side door of the compartment 302, the rear side door being disposed relative to the front of the vehicle. The rear side door may rotate relative to the compartment, such that on one hand, the operating platform 120 inside the compartment may be protected by the landing platform 130 during vehicle transporting, on the other hand, when the rear side door is open, it may provide an area for the landing and take-off of the UAV 200.

It should be noted that in the present disclosure, relational terms such as first and second, etc., are only used to distinguish an entity or operation from another entity or operation, and do not necessarily imply that there is an actual relationship or order between the entities or operations. The terms "comprising," "including," or any other variations are intended to encompass non-exclusive inclusion, such that a process, a method, an apparatus, or a device having a plurality of listed items not only includes these items, but also includes other items that are not listed, or includes items inherent in the process, method, apparatus, or device. Without further limitations, an item modified by a term "comprising a ..." does not exclude inclusion of another same item in the process, method, apparatus, or device that includes the item.

The base station and the vehicle provided in embodiments of the present disclosure have been described in detail above. In the present disclosure, particular examples are used to explain the principle and embodiments of the present disclosure, and the above description of embodiments is merely intended to facilitate understanding the methods in the embodiments of the disclosure and concept thereof; meanwhile, it is apparent to persons skilled in the art that changes can be made to the particular implementation and application scope of the present disclosure based on the concept of the embodiments of the disclosure, in view of the above, the contents of the specification shall not be considered as a limitation to the present disclosure.

## Claims

1. A base station in wireless communication with a UAV, comprising:
an operating platform;
a landing platform, the landing platform and the operating platform being independent of each other and the landing platform being adjacent to the operating platform, or the landing platform and the operating platform being an integral structure;
a transfer mechanism at least partially disposed on the landing platform to send the UAV landed on the landing platform into the operating platform and/or transfer the UAV stored in the operating platform onto the landing platform; and
a controller configured to trigger the base station to perform a UAV recovery operation and/or a UAV releasing operation when a state of the UAV meets a specific strategy or when a dispatch instruction is received; and control the operating platform to perform at least one of the following operations of UAV power source update, UAV part replacement, UAV payload supplementation, UAV data exchange, and UAV storage while the base station performing the UAV recovery operation and/or the UAV releasing operation.

2. The base station of claim 1, further comprising:
a guiding mechanism disposed on the landing platform and movably arranged relative to the transfer mechanism; and
a first power unit for driving movement of the guiding mechanism, the first power unit being used to drive the guiding mechanism to move relative to the transfer mechanism to position the UAV landed on the landing platform to the transfer mechanism.

3. The base station of claim 1, wherein:
the landing platform is connected to the operating platform, and is configured to switch between a storage state and an extended state relative to the operating platform, the landing platform being in the extended state for landing the UAV.

4. The base station of claim 3, wherein the landing platform is arranged to rotate relative to the operating platform that:
when the landing platform and the operating platform are in a first relative position relationship, the landing platform is in the extended state; and
when the landing platform and the operating platform are in a second relative position relationship, the landing platform is in the storage state.

5. The base station of claim 3, wherein the landing platform is movable relative to the operating platform that:
when the landing platform moves into the operating platform, the landing platform is in the storage state; and
when the landing platform moves partially outside the operating platform, the landing platform is in the extended state.

6. The base station of claim 1, wherein:
the operating platform includes a transporting mechanism for transporting the UAV sent into the operating platform for the operating platform to perform one or more operations on the UAV at a corresponding position.

7. The base station of claim 6, wherein:
the transporting mechanism and the transfer mechanism are an integrated structure, or the transporting mechanism and the transfer mechanism are independent and adjacent to each other.

8. The base station of claim 1, wherein:
the operating platform includes a power source supplement device for supplementing power for the UAV sent into a first predetermined position in the operating platform.

9. The base station of claim 8, wherein:
the power source supplement device includes charging pile for charging a built-in battery of the UAV sent into the first predetermined position in the operating platform, or the charging pile is used to charge a disassembled battery removed from the UAV.

10. The base station of claim 9, wherein:
the controller is further configured to monitor an amount of power of the built-in battery and/or the disassembled battery to turn off the charging pile or disconnect an electrical connection between the charging pile and the built-in battery and/or the disassembled battery when the amount of power of the built-in battery and/or the disassembled battery is greater than or equal to a first predetermined threshold.

11. The base station of claim 9, wherein:
the controller is further configured to monitor the amount of power of the built-in battery and/or the disassembled battery of the UAV to control the charging pile to start when the amount of power is lower than a second predetermined threshold.

12. The base station of claim 9, wherein:
the charging pile includes a plurality of charging interfaces, and the controller is configured to select an idle charging interface for the built-in battery and/or the disassembled battery to be charged based on an idle state of each charging interface.

13. The base station of claim 8, wherein:
the power source supplement device includes a refueling device for supplementing an amount of fuel of the UAV sent to the first predetermined position of the operating platform.

14. The base station of claim 8, wherein:
the power source supplement device includes a battery replacement device for replacing the battery of the UAV sent into the first predetermined position of the operating platform.

15. The base station of claim 9, wherein:
the operating platform further includes a storage mechanism for storing a plurality of UAVs sent to the operating platform, the first predetermined position being a position of the storage mechanism.

16. The base station of claim 15, wherein:
the storage mechanism includes a plurality of storage racks, the plurality of storage racks being disposed along a direction perpendicular to a transporting direction of the transfer mechanism, and
the storage mechanism is movably disposed along a mounting direction of the storage racks for storing the UAV currently sent into the operating platform to an idle storage rack.

17. The base station of claim 15, wherein:
the storage mechanism includes a plurality of storage racks, the plurality of storage racks being disposed along a transporting direction of the transfer mechanism,
the landing platform is a side surface of the operating platform that is perpendicular to the transporting direction, and
the transfer mechanism is configured to limit the position of the UAV and send the UAV into an idle storage rack.

18. The base station of claim 15, wherein:
the storage mechanism is disposed between the landing platform and the charging pile, or
the charging pile is adjacent to the landing platform, and the storage mechanism is on a side of the charging pile away from the landing platform.

19. The base station of claim 18, wherein:
the operating platform further includes a smart manipulator, the smart manipulator being disposed adjacent to the charging pile or on the charging pile,
the smart manipulator being configured to disassemble a UAV battery stored in the storage mechanism and place the UAV battery on the charging pile, and/or take the charged battery from the charging pile and mount the UAV battery on the UAV stored in the storage mechanism.

20. The base station of claim 15, wherein:
the operating platform includes a payload supplement device, the payload supplement device being disposed adjacent to or on the storage mechanism,
the payload supplement device is configured to supplement the payload of the UAV when the base station is in an activated state and the UAV sent into the operating platform is in the first predetermined position.

21. The base station of claim 20, wherein payload supplement device includes at least one of the following:
a pesticide supplement device, a water supplement device, a seed supplement device, and a logistic payload supplement device.

22. The base station of claim 21, wherein the pesticide supplement device includes at least one of the following:
a liquid pesticide supplement device and a solid pesticide supplement device.

23. The base station of claim 21, wherein:
the pesticide supplement device includes a water tank, a pesticide stock solution tank, and a mixing tank;
the pesticide supplement device is configured to extract water in the water thank and the pesticide in the pesticide stock solution tank to the mixing tank based on a specific ratio to obtain a pesticide solution for the UAV.

24. The base station of claim 1, wherein the state of the UAV meeting the specific strategy including at least one of the following:
insufficient power source of the UAV;
parts of the UAV being in a faulty state;
insufficient payload of the UAV; and
the UAV meeting a condition for data exchange with the base station.

25. The base station of claim 24, wherein insufficient power source of the UAV includes:
the amount of power of the UAV battery being less than or equal to a first predetermined power threshold, or a fuel volume of the UAV being less than or equal to a first predetermined fuel threshold.

26. The base station of claim 24, wherein insufficient payload of the UAV includes:
a pesticide dosage of the UAV being less than or equal to a first predetermined dosage threshold;
a water volume of the UAV being less than or equal to a first predetermined water volume threshold; and
a seed quantity of the UAV being less than or equal to a first predetermined seed quantity threshold.

27. The base station of claim 26, wherein pesticide includes at least one of the following:
a liquid pesticide and a solid pesticide.

28. The base station of claim 24, wherein the UAV meeting a condition for data exchange with the base station includes:
a time between a current time and a time of a previous data exchange between the UAV and the base station meets a predetermined exchange period condition; or,
a data amount of data information of the UAV being greater than or equal to a predetermined data amount threshold, the data information of the UAV including at least one of the following:
image data information captured by a camera on the UAV, flight trajectory information of the UAV, and historical location data information of the UAV.

29. The base station of claim 1, wherein the state of the UAV meeting the specific strategy includes at least one of the following:
a completion of power source supplement, a completion of payload supplement, a completion of part maintenance, a completion of data exchange between the UAV and the base station.

30. The base station of claim 29, wherein the completion of power source supplement includes:
the amount of power of a UAV battery exceeding a second power threshold, or
a fuel of the UAV exceeding a second fuel threshold.

31. The base station of claim 29, wherein the completion of payload supplement includes at least one of the following:
the pesticide dosage of the UAV exceeding a second predetermined dosage threshold;
the water volume of the UAV exceeding a second predetermined water volume threshold; and
the seed quantity of the UAV exceeding a second predetermined seed quantity threshold.

32. The base station of claim 29, wherein the completion of part replacement/maintenance includes:
parts switching from a faulty state to a normal working state.

33. The base station of claim 29, wherein the completion of data exchange between the UAV and the base station includes at least one of the following:
the base station has downloaded current data information of the UAV; and
the base station has completed a firmware upgrade of the UAV, the data information of the UAV including at least one of the following:
the image data information captured by the camera on the UAV, the flight trajectory information of the UAV, and the historical location data information of the UAV.

34. The base station of claim 1, further comprising:
a power generation device configured to at least supply power to the operating platform, the landing platform, the controller, and the transfer mechanism.

35. The base station of claim 1, further comprising:
a security area for storing items.

36. A vehicle comprising:
a body;
a base station disposed on the body to communicate wireless with a UAV, the base station including:
an operating platform;
a landing platform, the landing platform and the operating platform being independent of each other and the landing platform being adjacent to the operating platform, or the landing platform and the operating platform being an integral structure;
a transfer mechanism at least partially disposed on the landing platform to send the UAV landed on the landing platform into the operating platform and/or transfer the UAV stored in the operating platform onto the landing platform; and
a controller configured to trigger the base station to perform a UAV recovery operation and/or a UAV releasing operation when a state of the UAV meets a specific strategy or when a dispatch instruction is received; and control the operating platform to perform at least one of the following operations of UAV power source update, UAV part replacement, UAV payload supplementation, UAV data exchange, and UAV storage while the base station performing the UAV recovery operation and/or the UAV releasing operation.

37. The vehicle of claim 36, further comprising:
a guiding mechanism disposed on the landing platform and movably arranged relative to the transfer mechanism; and
a first power unit for driving movement of the guiding mechanism, the first power unit being used to drive the guiding mechanism to move relative to the transfer mechanism to position the UAV landed on the landing platform to the transfer mechanism.

38. The vehicle of claim 36, wherein:
the landing platform is connected to the operating platform, and is configured to switch between a storage state and an extended state relative to the operating platform, the landing platform being in the extended state for landing the UAV.

39. The vehicle of claim 38, wherein the landing platform is arranged to rotate relative to the operating platform that:
when the landing platform and the operating platform are in a first relative position relationship, the landing platform is in the extended state; and
when the landing platform and the operating platform are in a second relative position relationship, the landing platform is in the storage state.

40. The vehicle of claim 38, wherein the landing platform is movable relative to the operating platform that:
when the landing platform moves into the operating platform, the landing platform is in the storage state; and
when the landing platform moves partially outside the operating platform, the landing platform is in the extended state.

41. The vehicle of claim 36, wherein:
the operating platform includes a transporting mechanism for transporting the UAV sent into the operating platform for the operating platform to perform one or more operations on the UAV at a corresponding position.

42. The vehicle of claim 41, wherein:
the transporting mechanism and the transfer mechanism are an integrated structure, or the transporting mechanism and the transfer mechanism are independent and adjacent to each other.

43. The vehicle of claim 36, wherein:
the operating platform includes a power source supplement device for supplementing power for the UAV sent into a first predetermined position in the operating platform.

44. The vehicle of claim 43, wherein:
the power source supplement device includes charging pile for charging a built-in battery of the UAV sent into the first predetermined position in the operating platform, or the charging pile is used to charge a disassembled battery removed from the UAV.

45. The vehicle of claim 44, wherein:
the controller is further configured to monitor the power of the built-in battery and/or the disassembled battery to turn off the charging pile or disconnect an electrical connection between the charging pile and the built-in battery and/or the disassembled battery when the power of the built-in battery and/or the disassembled battery is greater than or equal to a first predetermined threshold.

46. The vehicle of claim 44, wherein:
the controller is further configured to monitor an amount of power of the built-in battery and/or the disassembled battery of the UAV to control the charging pile to start when the amount of power is lower than a second predetermined threshold.

47. The vehicle of claim 44, wherein:
the charging pile includes a plurality of charging interfaces, and the controller is configured to select an idle charging interface for the built-in battery and/or the disassembled battery to be charged based on an idle state of each charging interface.

48. The vehicle of claim 43, wherein:
the power source supplement device includes a refueling device for supplementing an amount of fuel of the UAV sent to the first predetermined position of the operating platform.

49. The vehicle of claim 43, wherein:
the power source supplement device includes a battery replacement device for replacing the battery of the UAV sent into the first predetermined position of the operating platform.

50. The vehicle of claim 44, wherein:
the operating platform further includes a storage mechanism for storing a plurality of UAVs sent to the operating platform, the first predetermined position being a position of the storage mechanism.

51. The vehicle of claim 50, wherein:
the storage mechanism includes a plurality of storage racks, the plurality of storage racks being disposed along a direction perpendicular to a transporting direction of the transfer mechanism, and
the storage mechanism is movably disposed along a mounting direction of the storage racks for storing the UAV currently sent into the operating platform to an idle storage rack.

52. The vehicle of claim 50, wherein:
the storage mechanism includes a plurality of storage racks, the plurality of storage racks being disposed along a transporting direction of the transfer mechanism,
the landing platform is a side surface of the operating platform that is perpendicular to the transporting direction, and
the transfer mechanism is configured to limit the position of the UAV and send the UAV into an idle storage rack.

53. The vehicle of claim 50, wherein:
the storage mechanism is disposed between the landing platform and the charging pile, or
the charging pile is adjacent to the landing platform, and the storage mechanism is on a side of the charging pile away from the landing platform.

54. The vehicle of claim 53, wherein:
the operating platform further includes a smart manipulator, the smart manipulator being disposed adjacent to the charging pile or on the charging pile,
the smart manipulator being configured to disassemble the UAV battery stored in the storage mechanism and place the UAV battery on the charging pile, and/or take the charged battery from the charging pile and mount the UAV battery on the UAV stored in the storage mechanism.

55. The vehicle of claim 50, wherein:
the operating platform includes a payload supplement device, the payload supplement device being disposed adjacent to or on the storage mechanism,
the payload supplement device is configured to supplement the payload of the UAV when the base station is in an activated state and the UAV sent into the operating platform is in the first predetermined position.

56. The vehicle of claim 55, wherein payload supplement device includes at least one of the following:
a pesticide supplement device, a water supplement device, a seed supplement device, and a logistic payload supplement device.

57. The vehicle of claim 56, wherein the pesticide supplement device includes at least one of the following:
a liquid pesticide supplement device and a solid pesticide supplement device.

58. The vehicle of claim 57, wherein:
the pesticide supplement device includes a water tank, a pesticide stock solution tank, and a mixing tank;
the pesticide supplement device is configured to extract water in the water thank and the pesticide in the pesticide stock solution tank to the mixing tank based on a specific ratio to obtain a pesticide solution for the UAV.

59. The vehicle of claim 36, wherein the state of the UAV meeting the specific strategy including at least one of the following:
insufficient power source of the UAV;
parts of the UAV being in a faulty state;
insufficient payload of the UAV; and
the UAV meeting a condition for data exchange with the base station.

60. The vehicle of claim 59, wherein insufficient power source of the UAV includes:
the amount of power of the UAV battery being less than or equal to a first predetermined power threshold, or a fuel volume of the UAV being less than or equal to a first predetermined fuel threshold.

61. The vehicle of claim 59, wherein insufficient payload of the UAV includes:
a pesticide dosage of the UAV being less than or equal to a first predetermined dosage threshold;
a water volume of the UAV being less than or equal to a first predetermined water volume threshold; and
a seed quantity of the UAV being less than or equal to a first predetermined seed quantity threshold.

62. The vehicle of claim 61, wherein pesticide includes at least one of the following:
a liquid pesticide and a solid pesticide.

63. The vehicle of claim 59, wherein the UAV meeting a condition for data exchange with the base station includes:
a time between a current time and a time of a previous data exchange between the UAV and the base station meets a predetermined exchange period condition; or,
a data amount of data information of the UAV being greater than or equal to a predetermined data amount threshold, the data information of the UAV including at least one of the following:
image data information captured by a camera on the UAV, flight trajectory information of the UAV, and historical location data information of the UAV.

64. The vehicle of claim 36, wherein the state of the UAV meeting the specific strategy includes at least one of the following:
a completion of power source supplement, a completion of payload supplement, a completion of part maintenance, a completion of data exchange between the UAV and the base station.

65. The vehicle of claim 64, wherein the completion of power source supplement includes:
the amount of power of the UAV battery exceeding a second power threshold, or
a fuel of the UAV exceeding a second fuel threshold.

66. The vehicle of claim 64, wherein the completion of payload supplement includes at least one of the following:
the pesticide dosage of the UAV exceeding a second predetermined dosage threshold;
the water volume of the UAV exceeding a second predetermined water volume threshold; and
the seed quantity of the UAV exceeding a second predetermined seed quantity threshold.

67. The vehicle of claim 64, wherein the completion of part replacement/maintenance includes:
parts switching from a faulty state to a normal working state.

68. The vehicle of claim 64, wherein the completion of data exchange between the UAV and the base station includes at least one of the following:
the base station has downloaded current data information of the UAV; and
the base station has completed a firmware upgrade of the UAV, the data information of the UAV including at least one of the following:
the image data information captured by the camera on the UAV, the flight trajectory information of the UAV, and the historical location data information of the UAV.

69. The vehicle of claim 36, further comprising:
a power generation device configured to at least supply power to the operating platform, the landing platform, the controller, and the transfer mechanism.

70. The vehicle of claim 36, further comprising:
a security area for storing items.

71. The vehicle of claim 36, further comprising:
a compartment, the operating platform being disposed in the compartment, and the landing platform including at least one side door of the compartment.

72. The vehicle of claim 71, wherein;
the landing platform includes a top side door of the compartment.

73. The vehicle of claim 72, wherein:
the landing platform includes a rear side door of the compartment, the rear side door being disposed relative to the front of the vehicle.
